# EUROPÄISCHE PATENTANMELDUNG

(11) **EP 1 298 023 A1**
(43) Veröffentlichungstag der Anmeldung: **02.04.2003**
(21) Anmeldenummer: 01128568.1
(22) Anmeldetag: 06.06.1997
(51) Int. Cl.: B62B 5/00

(54) **Verteiler-bzw. Zustellerwagen**

(30) Priorität: 08.06.1996 DE 19623001
(62) Teilanmeldung aus: 97109176.4
(71) Anmelder: EXPRESSO DEUTSCHLAND TRANSPORTGERÄTE GmbH, D-34123 Kassel (DE)
(72) Erfinder: Kratzenberg, Wolfgang, 34270 Schauenburg (DE); Stein, Siegfried, 34246 Vellmar (DE)
(74) Vertreter: Schön, Theodor, Patent- und Zivilingenieur

(57) **Zusammenfassung**

Bei einem Verteiler-bzw. Zustellerwagen, bestehend aus einem aus Rah-menholmen und Quertraversen gebildeten und über wenigstens eine um eine vertikale Achse schwenkbare Lenkrolle und zwei Bockrollen gegen den Boden abgestützten Wagenchassis und einem an dieses angeschlossenen aufragenden Griffbügel, wobei jeder der beiden Rollen eines Rollenpaares (Bock-oder Lenkrollen) ein getriebelos integrierter, unter Last anlaufender, drehrichtungsumkehrbarer Elektromotor zugeordnet ist und wobei die Energieversorgung der Elektromotoren durch eine Steuereinrichtung beherrscht ist, welche wenigstens einen die auf den Wagen ausgeübte Zug-oder Schubkraft bzw. Lenkkraft erkennenden und in ein Steuersignal umsetzenden Kraftmesser und eine Steuer-und Regeleinrichtung zur Energieversorgung der Elektromotoren im Verhältnis zu der jeweils auf den Wagen ausgeübten Schub-oder Zugkraft umfaßt, wird vorgeschlagen, daß die die Energieversorgung der Elektromotoren beherrschende Steuer-und Regeleinheit durch eine frei programmierbare elektronische Steuer-und Regeleinheit gebildet und das Hilfsantriebssytem insgesamt als gegebenenfalls auch nachrüstbarer Komponentensatz ausgebildet ist.

## Beschreibung

Die Erfindung bezieht sich auf einen Verteiler-bzw. Zusteller-wagen gemäß dem Oberbegriff des Anspruches 1.

Um die Zustellung bzw. Verteilung größerer Mengen an eine Viel-zahl von Empfängern zuzustellender bzw. zu verteilender Mate-rialien oder Mitteilungen und dergl. bei geringstmöglicher kör-perlicher Belastung der Zustell- oder Verteilerperson zu bewerkstelligen ist in der DE-OS 195 05 309 der eingangs beschriebene, motorgetriebene Verteiler-bzw. Zustellerwagen vorgeschlagen wor-den. Ein dieserart ausgestatteter Zustell-bzw. Verteilerwagen entlastet den Verteiler von dem für das Bewegen des Wagens er-forderlichen Kraftaufwand, wobei die in Abhängigkeit von der am Griffbügel angreifenden Zug-bzw. Schubkraft geregelte Energie-versorgung des Antriebsmotors nicht nur eine Anpassung der An-triebsleistung an die vom Zusteller bzw. Verteiler beabsichtigte Fahrgeschwindigkeit und zwar unabhängig vom Umfang der Beladung, d.h. dem momentanen Gesamtgewicht, des Wagens und unabhängig von Steigungs- oder Gefällestrecken, sondern auch einen sparsamen Energieverbrauch gewährleistet. Bei der bekannten Bauart eines solchen Verteiler-bzw. Zustellerwagens ist vorgesehen, daß der Griffbügel nach Art eines Fahrradlenkers ausgebildet und über eine durch einen einzigen Holm gebildete Verbindung mit dem Wa-genchassis verbunden ist und daß für die Steuerung der Energieversorgung der Elektromotoren ein die Verwindung des Holmes nach Richtung und Größe erkennender Sensor verwendet wird. Der Einsatz eines außer Druck-und Zugkräften auch noch Verwindungskräfte erkennenden und in Steuersignale für die Energieversorgung der Antriebsmotoren umsetzenden Sensors erfordert einen hohen technischen und wirtschaftlichen Aufwand und begrenzt dabei zugleich auch noch die Möglichkeiten zur Festlegung einer Einschaltschwelle für den Wagenantrieb erheblich.

Bei der vorstehend vorgestellten, wie auch allen sonstigen be-kannten Bauarten hilfkraftunterstützter Verteiler-bzw. Zustellerwagen zeichnet sich die Ausbildung des Hilfskraftantriebes und seiner Steuerung durch eine von vornherein und unveränderlich auf die Ausstattung einer bestimmten Ausführungsform eines Verteiler-bzw. Zustellerwagens gerichtete Ausrichtung aus und kann daher nur in Verbindung mit Neuwagen verwendet werden.
In Anbetracht der Langlebigkeit des Gerätes ist im Interesse eines wirtschaftlichen Einsatzes der Hilfskraftunterstützung von Verteiler-bzw.Zustellerwagen als weitgehende Arbeitserleichterung eine Vereinheitlichung der erforderlichen Bauteile, welche auch eine Nachrüstung bereits vorhandener Verteiler-bzw. Zustellerwagen ermöglicht, anzustreben.

Der Erfindung liegt daher die Aufgabe zugrunde einen Hilfsan-trieb für Zusteller-bzw. Verteilerwagen der eingangs genannten Bauart dahingehend zu verbessern, daß er mit einem geringstmöglichen wirtschaftlichen und technischen Aufwand herstellbar und insbesondere hinsichtlich seiner Ausbildung und Steuerung an unterschiedlichsten Bauarten von Zusteller-bzw. Verteilerwagen einsetzbar sowie auch als Nachrüstsatz montierbar ist

Diese Aufgabe wird durch die im Anspruch 1 angegebenen Merkmale gelöst. Vorteilhafte Ausgestaltungen und zweckmäßige Weiterbildungen sind in den Unteransprüchen angegeben.
Dabei ist vorgesehen, daß jeder der beiden Sensoren bzw. Mo-ment-oder Kraftmesser jeweils einem der beiden Elektromotoren der Antriebsachse und zwar jeweils dem an der gleichen Wagenseite angeordneten Elektromotor zugeordnet ist, derart, daß jeder der beiden Antriebsmotoren einer Achse ausschließlich von dem mit ihm gleichseitig angeordneten Kraft-oder Momentmesser bzw. Sensor lediglich eine der in der entsprechenden Richtung an dem zugehörigen Schenkel des Schiebebügels wirkenden Schub-oder Zugkraft entsprechende Energiezufuhr in Vorwärts oder Rückwärtsfahrtrichtung zugeteilt erhält. Daraus resultiert, daß bei symetrischem bzw. mittigem Kraftangriff am Schiebebügel beide An-triebsmotoren gleichmäßig mit einer der Größe der am Schiebebügel ausgeübten Schub-oder Zugkraft entsprechenden Energiemenge in Vorwärts-oder Rückwärtsfahrtrichtung versorgt werden, so daß der Wagen geradlinig und mit einer der Größe der am Schiebebügel ausgeübten Kraft entsprechenden Geschwindigkeit entweder vor-wärts oder rückwärts fährt. Bei unsymetrischem, insbesondere auch einseitigem Kraftangriff am Schiebebügel werden die beiden An-triebsmotoren zwar noch richtungsgleich aber entsprechend der Asymetrie des Kraftangriffes mit unterschiedlichen Energiemengen versorgt, so daß der Wagen eine Kurve mit einem der Größe der Asymetrie des Kraftangriffes am Schiebebügel entsprechenden Radius fährt. Bei von der einen zur anderen Wagenlängsseite entgegengesetzt gerichtetem Kraftangriff am Schiebebügel werden die Antriebsmotoren in entgegengesetzten Richtungen mit Energie ver-sorgt, so daß der Wagen auf der Stelle dreht.

Weiterhin bringt eine freie Programmierbarkeit gegenüber allen unveränderlich programmierten Steuer-und Regeleinheiten den Vorteil mit sich, daß eine einheitlich ausgebildete Steuer-und Regeleinheit in Verbindung mit Wagen beliebiger Ausführungsform eingesetzt und durch entsprechgendes Programmieren sowohl den aus der Wagenbauart als auch den aus dem Einsatzbereich eines Wagens resultierenden, unterschiedlichen Anforderungen angepaßt werden kann, woraus sich der weitere Vorteil einer verhältnismäßig einfachen Nachrüstbarkeit auch vorhandener Wagen ergibt. Darüberhinaus eröffnet sich die Möglichkeit einer einfach auszuführenden, späteren Anpassung vorhandener Wagen an veränderte Betriebsbedingungen. Im Weiteren ermöglicht die freie Programmierbarkeit der Steuer-und Regeleinheit schließlich auch die gegenseitige Anpassung als standartisierte Baugruppen ausgebildeter Komponenten eines Hilfsantriebes für Verteiler-bzw. Zustellwagen.

In Anpassung an eine erste Bauart insbesondere eines vergleichs-weise kleinen Verteiler-bzw. Zustellerwagens kann in Anwendung der Erfindung vorgesehen, daß bei einem über zwei mit einem ge-trieblos integrierten Radnabenmotor ausgestattete hintere Bock-rollen sowie wenigstens eine vordere Rolle gegen den Boden abge-stützten Verteiler-bzw. Zustellerwagen ein als Deichsel ausgebildeter Griffbügel des Wagens mit lediglich einem Handgriff ausgestattet ist wobei der Handgriff mit einem ersten Paar die an der Deichsel in Wagenlängsrichtung ausgeübten Schub-und Zugkräfte und mit einem zweiten Paar die in Wagenquerrichtung an der Deichsel ausgeübten Lenkkräfte erfassenden und in Steuersignale für die die Energieversorgung der Radnabenmotoren beherr-schende Steuer-und Regeleinheit umwandelden Kraftmessern ausge-stattet ist.

Zur Erzielung eine platzsparenden Unterbringung der der Erfas-sung von Schub-oder Zugkräften sowie der Erfassung von Lenk-kräften zugeordneten Kraftmesser innerhalb eines einzigen Handgriffes ist zweckmäßigerweise vorgesehen, daß die Kraftmes-ser durch Streifen aus einem seinen elektrischen Widerstand in Abhängigkeit von einer auf seine Grundrißfläche insgesamt aufgebrachten Druckkraftbeaufschlagung varierendem Folienmaterial gebildet sein und sowohl in Wagenlängsrichtung als auch in Wagenquerrichtung einander gegenüberliegend an einem einen quaratischen Profilquerschnitt aufweisenden vertikal ausge-richteten Griffsteg des an die Deichsel angeschlossenen Hand-griffes angeordnet sind.
Im Weiteren kann bei dieser Verwirklichungsform eines Hilfsantriebes für einen Verteiler.-bzw. zustellerwagen vorgesehen sein, daß zusätzlich die frei programmierbare Steuer-und Re-geleinheit in dem an die Deichsel angeschlossenen Handgriff untergebracht ist und mit den Radnabenmotoren der Bockrollen lediglich über mit Anschlußsteckern ausgestattete Steuerlei-tungen in Verbindung steht.

Bei einer abgewandelten Ausführungsform größerer Verteiler-bzw. Zustellerwagens ist vorgesehen, daß der Griffbügel des Wagens mit zwei in Wagenquerrichtung zueinander beabstandet angeordneten Handgriffen ausgestattet ist, wobei in jedem der beiden Handgriffe zwei bezüglich eines Widerlagers einander gegenüberliegend angeordnete lediglich auf den Wagen ausgeübte Schub-und Druckkräfte erkennende, insbesondere durch Streifen eines Folienmaterials, welches seinen elektrischen Widerstand proportional zu einer auf seine Gesamtfläche insgesamt aufgebrachten Druckkraft ändert, gebildete Kraftmesser angeordnet sind. In vorteilhafter Ausgestaltung dieser Ausführungsform ist zweckmä-ßigerweise weiter vorgesehen, daß jedem der aus zwei in einen Handgriff integrierten Folienstreifen gebildeten Kraftmesser ein eigener Eingang des Rechners der Steuer-und Regeleinheit zuge-ordnet ist und daß jedem der beiden Kraftmesser jeweils ein Ausgang des Rechners zur Ansteuerung eines Radnabenantriebes zugeordnet ist.

Unabhängig davon bei welcher der beiden vorgenannten Bauarten von Verteiler-bzw. Zustellerwagen, der erfindungsgemäße Hilfs-antrieb eingesetzt wird, ist im Interesse einer Vereinheitli-chung von Komponenten vorteilhafterweise vorgesehen, daß die Ein-und Ausgänge des Rechners der Steuereinheit mit als Steck-anschlüsse ausgebildeten Schnittstellen versehen sind und die Hangriffe sowie die jeweils einen getriebelos integrierten Antriebsmotor aufweisenden angetriebenen Rollen vermittels Adapter an das Chassis des Wagens anbaubar sowie vermittels Steckverbindungen mit den Ein-bzw. Ausgängen des Rechners verbindbar sind. Die Ausbildung der verschiedenen Bauteile, wie Handgriffe oder antreibbarer Rollen als jeweils eigenständige Bauelemente, welche bei im Wesentlichen einheitlicher Ausführung lediglich vermittels geeigneter Adapter an praktische jeden beliebigen Wagen, gegebenenfalls sogar im Austausch zu vorhandenen Bauteilen anbaubar sind führt in Verbindung mit einer Anschlußververbindung jeweils über ansteckbare Leitungen zu einem Baukastensystem, dessen Bausteine bei einheitlicher Ausführung für alle vorkommenden Anwendungsfälle einsetzbar sind. Diese weitreichende Einsetzbarkeit der einzelnen Bausteine eines Baukastensystemes wird dadurch ermöglicht, daß die Steuer-und Regeleinrichtung frei programmierbar ist und daher auf dem Regelweg eine Anpassung der Funktionen der Bauteile an die Anforderungen von Wagen unterschiedlichen Gewichtes oder unterschiedlichen Lenkverhaltens und dergl. mehr herstellt.

In weiterer, von der Bauart eines Verteiler-bzw. Zustellerwagens unabhängiger Ausgestaltung von Komponenten einer Hilfsantriebseinrichtung kann ferner vorgesehen sein, daß zumindest der ver-tikal gerichtete Griffsteg jedes Handgriffes mit einer Ummantelung aus einem elastischen Material ausgestattet ist und daß die der Ansteuerung der Radnabenmotoren zugeordneten Ausgänge des Rechners jeweils vermittels einer Treiberstufe und einer End-stufe an eine durch einen Stecker gebildete Schnittstelle angeschlossen sind.
Schließlich ist es ferner auch noch zweckmäßig hilfskraftbe-triebene Verteiler-und Zustellerwagen mit einem Schalter zur Stillegung der Hilfskraftantriebseinrichtung des Wagens und einer Ladezustandsanzeige der Akkumulatoren auszustatten, wobei vorgesehen sein kann, daß wenigstens einer der Handgriffe eines Wagens mit einer, insbesondere durch eine Leuchtdiode gebildeten Ladezustandsanzeige, versehen ist.

Im Rahmen der Verwirklichung eines Verteiler-und Zustellerwagens kann abweichend von den weiter oben als besonders vorteilhaft herausgestellten auch jede andere bekannte und geeignete Bauart von Kraftmessern verwendet werden, sofern sie bei ausreichender Betriebssicherheit hinreichend kleinbauend gestaltet werden können, um innerhalb eines Handgriffes für einen Verteiler-und Zustellerwagen untergebracht werden zu können.

Im Rahmen einer weiteren Verwirklichungsform insbesondere größerer Verteiler-bzw. Zustellerwagen kann auch vorgesehen sein, daß der Griffbügel aus einem rohrförmigen Profilmaterial besteht und insgesamt als etwa U- förmiger Schiebebügel ausgebildet ist, wobei die freien Enden der beiden Profilschenkel der U-Form im wesentlichen vertikal aufragend und starr an das Wagenchassis angeschlossen sind und wobei der Profilgrund der U-Form einen zumindest zum Benutzer hin abgewinkelten Bügel bildet und daß an jedem der beiden Profilschenkel des Schiebebügels je ein Sensor bzw. Moment-oder Kraftmesser angeordnet ist.

Insbesondere ergibt sich eine vorteilhafte Ausgestaltungsmög-lichkeit daraus, daß die beiden Sensoren bzw. Moment-oder Kraft-messer bezüglich des Profilmaterials des Schiebebügels innenlie-gend angeordnet sind und jeweils als lineare, ausschließlich in Wagenlängsrichtung gerichtete Kräfte erfassende Kraft-oder Momentmeßeinrichtung ausgebildet sind. Damit können Sensoren bzw. Kraft-oder Momentmesser eingesetzt werden, welche lediglich in einer Ebene wirkende Kräfte erfassen und sich daher zum einen durch eine verhältnismäßig einfache und damit kostengünstige Bauart auszeichnen und welche es zum anderen zugleich auch er-möglichen die Einschaltschwelle des Antriebes des Wagens wenig-stens innerhalb gewisser Grenzen exakter festzulegen, so daß sich der Wagen nicht infolge unbeabsichtigter Berührungen unbeabsichtigt in Bewegung setzen kann, sondern vielmehr eine ge-wisse Mindestkraft am Schiebebügel angreifen muß, um eine Inbetriebnahme bzw. ein Anlaufen der Elektromotoren auszulösen. Selbstverständlich kann ergänzend auch ein den Sensoren nach-geschaltetes Zeitglied oder dergl. vorgesehen sein, welches dafür sorgt, daß eine Inbetriebnahme bzw. ein Anlaufen der Elektromotoren nur bei über einen gewissen Zeitraum hin am Schiebe-bügel angreifender Krafteinwirkung ausgelöst wird, so daß auch ein verhältnismäßig hartes Anrempeln des Schiebebügels noch keine eigenständige Bewegung des Wagens auslösen kann.

Für die Anordnung und Ausbildung der Sensoren als Kraft-oder Momentmesser stehen hierbei wenigstens zwei Möglichkeiten zur Verfügung, in der Weise, daß im Bereich der Fußteile der Profilschenkel des Schiebebügels angeordnete Sensoren als Momentmesser und im Bereich des Bügels des Schiebebügels angeordnete Sensoren zweckmäßigerweise als Kraftmesser ausgebildet sind. In jedem Fall sind die Sensoren, seien sie nun als Kraft-oder als Moment-messer ausgebildet, in an sich bekannter Weise zur Erzeugung eines die angreifende Kraft bzw. das angreifende Moment wieder-spiegelnden Steuerstromes zur Ansteuerung der Steuereinrichtung für die Energiezufuhr für den jeweils zugehörigen bzw. gleich-seitig angeordneten Elektromotor ausgebildet sind. In einer bevorzugten Auswahl der Anordnung und Ausbildung der Sensoren kann jedoch vorgesehen sein, daß diese als Momentmesser ausgebildet und im Fußbereich der Profilschenkel des Schiebebügels angeordnet sind, was bei einfacherer Ausbildung der Sensoren und des jeweils nachgeschalteten Steuerkreises eine größere Unempfindlichkeit der Ansteuerung der Elektromotoren gegenüber unbeabsichtigten Berührungen des Schiebebügels ermöglicht.

Die Erfindung ist in der nachfolgenden Beispielsbeschreibung anhand einiger in der Zeichnung dargestellter Ausführungsbeispiele im Einzelnen beschrieben.

In der Zeichnung zeigt die
- Figur 1: eine schematische schaubildliche Darstellung des Chassis samt Anordnung der Sensoren im Schiebebügel eines Verteiler-bzw. Zustellerwagens;
- Figur 2: eine Einzelheit zu Figur 1 im vergrößerten Maßstab;
- Figur 3: eine schematische schaubildliche Darstellung des Chassis samt abgewandeltes Anordnung der Sensoren im Schiebebügel eines Verteiler-bzw. Zustellerwagens;
- Figur 4: eine schematische schaubildliche Darstellung des Chassis einer abgewandelten Bauart eines Verteiler-bzw. Zustellerwagens mit Anordnung der Sensoren im einzigen Handgriff;
- Figur 5: eine schematische schaubildliche Darstellung des Chassis einer anderen abgewandelten Bauart eines Verteiler-bzw. Zustellerwagens mit Anordnung der Sensoren in den beiden Handgriffen;
- Figur 6: eine Explosionsdarstellung zu Figur 5;
- Figur 7: eine schematische schaubildliche Darstellung des Chassis einer weiteren abgewandelten Bauart eines mit Anordnung der Sensoren in den beiden Handgriffen;
- Figur 8: eine schaubildliche Einzeldarstellung eines Handgriffes;
- Figur 9: eine Schnittdarstellung durch einen bei einem mit einer Deichsel ausgestatteten Verteiler-bzw. Zustellerwagen als Einzelgriff eingesetzten Handgriff;
- Figur 10: eine Schnittdarstellung durch einen bei mit zwei Griffen ausgestatteten Verteiler-bzw. Zustellerwagen eingesetzten Handgriff;
- Figur 11: eine schematische Darstellung der Steuer-und Regeleinheit eines Verteiler-bzw. Zustellerwagens gemäß einer jeder der Ausführungsformen nach Figur 1 bis 7;
- Figur 12: eine schematische Explosionsdarstellung des baukastenarigen Aufbaues eines mit einem Hilfsantrieb ausgestatteten Verteiler-bzw. Zustellerwagens.

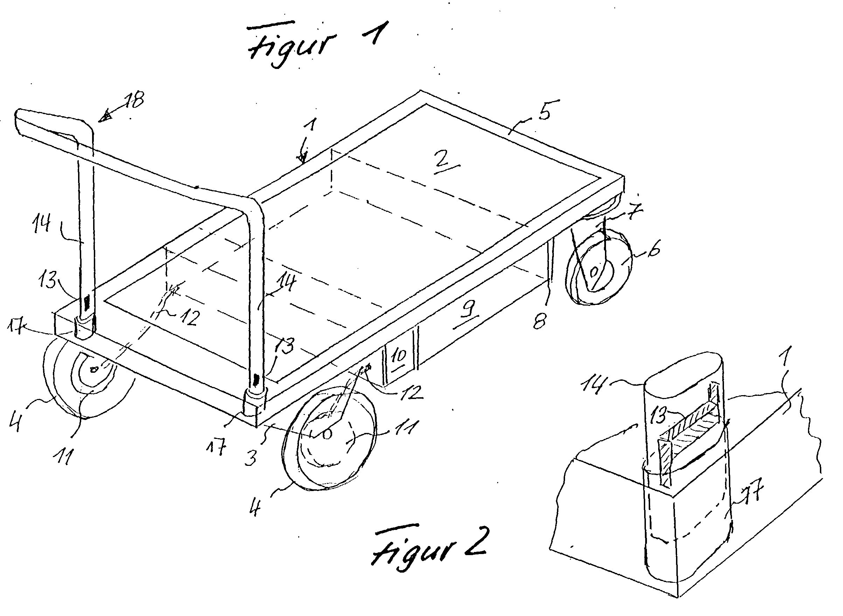

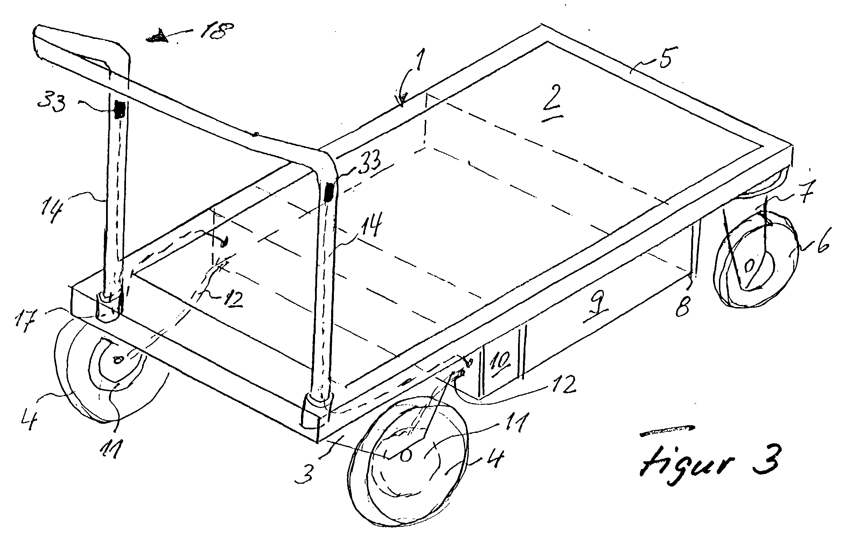

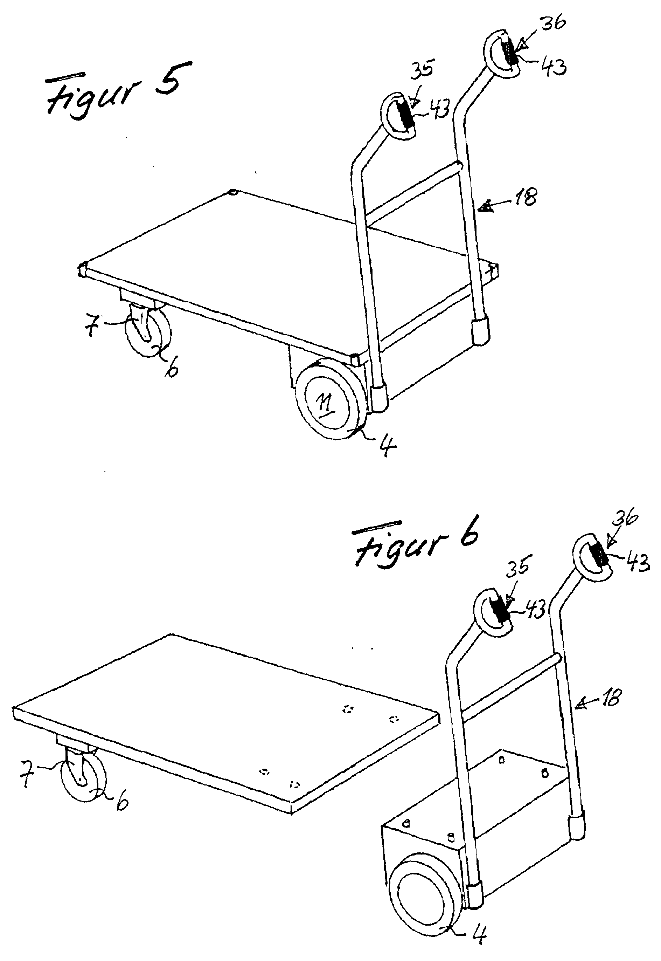

Das Chassis der in der Zeichnung schematisch dargestellten Ver-teiler-bzw. Zustellerwagen besteht im wesentlichen aus einem umlaufenden Profilmaterialrahmen I, an dem einerseits Aufstands-flächen 2 für einen nicht näher dargestellten Wechselaufbau und andererseits Achsträger 3 für starre Bockrollen 4 sowie vermit-tels eines Querträgers 5 die den vorderen Lenkrollen 6 zugeord-neten Lenkrollenaufhängungen bildenden Joche 7 angeschlossen sind. In einer Einschubhalterung 8 des Wagenchassis ist in einem Batteriekasten 9 ein Satz Batterien oder Akkumulatoren aufgenom-men. Neben dem Batterie- oder Akkumulatorensatz ist ferner eine elektronische Steuerschaltung 10 untergebracht, wobei die Steu-erschaltung 10 die Regelung der Energieversorgung von den Bock-rollen 4 zugeordneten und als Radnabenmotoren ausgebildeten, unter Last anlaufenden sowie drehrichtungsumkehrbaren Elektro-motoren 11 übernimmt und mit diesen über Steuer-und Versorgungsleitungen 12 verbunden ist. Der Signalerzeugung für die Steuerschaltpung 10 sind in der Ausführungsform nach Figur 1 als Momentmesser ausgebildete Sensoren 13 zugeordnet, von denen lediglich eine schematische Darstellung 13 gezeigt ist.
An den Profilmaterialrahmen 1 ist weiterhin vermittels zweier Klemmhülsen 17 starr ein Schiebebügel 18 angeschlossen. Der insgesamt etwa U-förmig ausgebildete Schiebebügel 18 besteht, wie insbesondere aus der Darstellung der Figur 2 ersichtlich, aus einem rohrförmigen Profilmaterial und ist über die freien Enden seiner beiden Profilschenkel 14 im wesentlichen vertikal aufra-gend und starr an das Wagenchassis 1 angeschlossen. Der Profilgrund der U-Form des Schiebebügels 18 bildet einen bei 15 zum Benutzer hin abgewinkelten Bügel 16. In jedem der beiden Profilschenkel 14 des Schiebebügels 18 ist im Bereich deren Fußteiles je ein als Momentmesser ausgebildeter Sensor 13 ange-ordnet, wobei die beiden Sensoren 13 jeweils bezüglich des Profilmaterials des Schiebebügels 18 innenliegend angeordnet und jeweils als lineare, lediglich in einer Ebene ausschließlich in Wagenlängsrichtung gerichtete Momente erfassende Meßeinrichtung ausgebildet sind. Jeder der beiden Sensoren 13 ist jeweils einem der beiden Elektromotoren 11 der Antriebsachse und zwar jeweils dem an der gleichen Wagenseite angeordneten Elektromotor 11 zugeordnet, derart, daß jeder der beiden Antriebsmotoren einer Achse von dem mit ihm gleichseitig angeordneten Sensor 13 ledig-lich eine der in der entsprechenden Richtung an dem zugehörigen Schenkel des Schiebebügels 18 wirkenden Schub-oder Zugkraft entsprechende Energiezufuhr in Vorwärts oder Rückwärtsfahrtrichtung zugeteilt erhält. Daraus resultiert, daß bei symetrischem bzw. mittigem Kraftangriff am Schiebebügel 18 beide Antriebsmo-toren 11 gleichmäßig mit einer der Größe der am Schiebebügel ausgeübten Schub-oder Zugkraft entsprechenden Energiemenge in Vorwärts-oder Rückwärtsfahrtrichtung versorgt werden, so daß der Wagen geradlinig entweder vorwärts oder rückwärts fährt. Bei unsymetrischem Kraftangriff am Schiebebügel 18 werden die beiden Antriebsmotoren 11 zwar noch richtungsgleich aber entsprechend der Asymetrie des Kraftangriffes mit unterschiedlichen Energie-mengen versorgt, so daß der Wagen eine Kurve mit einem der Größe der Asymetrie des Kraftangriffes am Schiebebügel entsprechenden Radius fährt. Bei von der einen zur anderen Wagenlängsseite ent-gegengesetzten Kraftangriff am Schiebebügel 18 werden die Antriebsmotoren 11 in entgegengesetzten Richtungen mit Energie versorgt, so daß der Wagen auf der Stelle dreht.
Der Schiebebügel in sich torsionssteif ausgebildet, was im ge-zeigten Ausführungsbeispiel durch eine in gestrichelten Linien angedeutete Aussteifung 19 erreicht ist. In der Ausführungsform nach Figur 3 ist in jedem der beiden Profilschenkel 14 des Schiebebügels 18 ist je ein als Kraftmesser ausgebildeter Sensor 33 im Bereich des Bügels angeordnet, wobei die beiden Sensoren 33 gleichfalls jeweils bezüglich des Profilmaterials des Schiebebügels 18 innenliegend angeordnet und jeweils als lineare, lediglich in einer Ebene ausschließlich in Wagenlängsrichtung gerichtete Kräfte erfassende Meßeinrichtung ausgebildet sind. Woraus gleichfalls resultiert, daß bei symetrischem bzw. mittigem Kraftangriff am Schiebebügel 18 beide Antriebsmotoren 11 gleichmäßig mit einer der Größe der am Schie-bebügel ausgeübten Schub-oder Zugkraft entsprechenden Energiemenge in Vorwärts-oder Rückwärtsfahrtrichtung versorgt werden.

Die in den Figuren 4 bis 7 dargestellten Ausführungsformen von Verteiler-bzw. Zustellerwagen zeichnen sich durch eine Ausstattung mit einem 34 oder zwei Handgriffen 35,36 und die Unterbrin-gung der Kraftmesser zur Erfassung der auf den Wagen ausgeübten Schub-oder Zugkräfte sowie der gegebenenfalls auf den Wagen ausgeübten Lenkkräfte innerhalb der Handgriffe 34,35,36 aus.

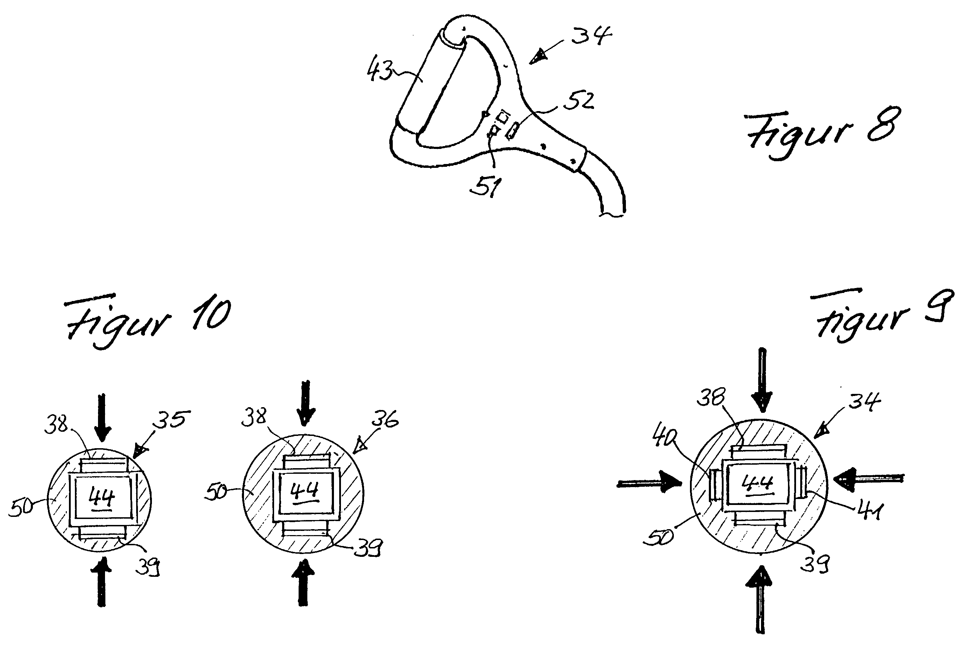

Bei der in der Figur 4 dargestellten Ausführungsform eines ver-gleichsweise kleinen Verteiler-bzw. Zustellerwagens ist das Chassis 66 des Wagens über zwei jeweils mit einem getrieblos integrierten Radnabenmotor 11 ausgestattete hintere Bockrollen 4 sowie eine vordere Rolle 6 gegen den Boden abgestützt. Der Verteiler-bzw. Zustellerwagen ist mit einem als Deichsel 37 ausge-bileten Griffbügel 18 mit lediglich einem einzigen Handgriff 34 ausgestattet. Der der Darstellung nach Figur 8 entsprechende Handgriff ist entsprechend der Darstellung in Figur 9 mit einem ersten Paar 38 und 39 die an der Deichsel 37 in Wagenlängsrichtung ausgeübten Schub-und Zugkräfte und mit einem zweiten Paar 40 und 41 die in Wagenquerrichtung an der Deichsel 37 ausgeübten Lenkkräfte erfassenden und in Steuersignale für die die Energie-versorgung der Radnabenmotoren 11 beherrschende Steuer-und Regeleinheit 42 umwandelden Kraftmessern ausgestattet. Die platz-sparend innerhalb des Griffsteges 43 des Handgriffes 34 untergebrachten Kraftmesser 38 bis 41 sind durch Streifen aus einem seinen elektrischen Widerstand in Abhängigkeit von einer auf seine Grundrißfläche insgesamt aufgebrachten Druckkraftbeaufschlagung varierendem Folienmaterial gebildet und sowohl in Wagenlängsrichtung als auch in Wagenquerrichtung einander gegenüberliegend an einem einen quaratischen Profilquerschnitt aufweisenden starren und vertikal ausgerichteten Innenteil 44 des Griffsteges 43 des an die Deichsel 37 angeschlossenen Hand-griffes 34 angeordnet. Innerhalb dieses als Hohlkörper ausgebildeten Innenteiles 44 des Griffsteges 43 des Handgriffes 34 ist bei dieser Ausführungsform auch eine weiter unten im Einzelnen beschriebene, frei programmierbare Steuer- und Regeleinheit 42 untergebracht. Mit den Radnabenmotoren 11 der Bockrollen 4 steht die im Handgriff 34 untergebrachte, frei programmierbare Steuer-und Regeleinheit 42, lediglich über mit Anschlußsteckern 45 ausgestattete, in der Zeichnung nicht besonders dargestellte Steuerleitungen in Verbindung.

Bei der in den Figuren 5 und 6 dargestellten Ausführungsform eines größeren, über zwei hintere Bockrollen 4 und zwei vordere Lenkrollen 6 gegen den Boden abgestützten Verteiler-bzw. Zustellerwagens ist der Griffbügel 18 des Wagens mit zwei in Wagen-querrichtung zueinander beabstandet angeordneten Handgriffen 35 und 36 ausgestattet, wobei, gemäß der Darstellung in der Figur 10 in jedem der beiden Handgriffe 35 und 36 zwei einander be-züglich eines durch ein starres Innenteil 44 des Griffsteges 43 gebildeten Widerlagers einander gegenüberliegend angeordnete lediglich auf den Wagen ausgeübte Schub-und Druckkräfte erkennende, insbesondere durch Streifen eines Folienmaterials, welches seinen elektrischen Widerstand proportional zu einer auf seine Gesamtfläche insgesamt aufgebrachten Druckkraft ändert, gebildete Kraftmesser 38 und 39 angeordnet sind.

Bei dieser Ausführungsform ist jedem der zwei jeweils in einen Handgriff 35 und 36 integrierten aus Folienstreifen gebildeten Kraftmesser 38 und 39 ein eigener Eingang 45 bzw. 46 des von den Handgriffen 35,36 unabhängig als eigenständige Baueinheit am Chassis des Wagens angeordneten Rechners 47 der frei program-mierbaren Steuer-und Regeleinheit 42 zugeordnet und ist ferner jedem der beiden Kraftmesser 38,39 jeweils ein Ausgang des Rechners 47 zur Ansteuerung eines Radnabenantriebes 11 zugeordnet, wobei jedem Engang 45,46 des Rechners 47 ein seitengleicher Ausgang 48,49 zugeordnet ist, derart, daß die an dem einer Wagenlängsseite zugeordneten Handgriff 35 bzw. 36 ermittelten Bedienerkräfte jeweils zu einer entsprechenden Ansteuerung der Radnabenmotors 11 der der gleichen Wagenlängsseite zugeordneten Bockrolle 4 führen.

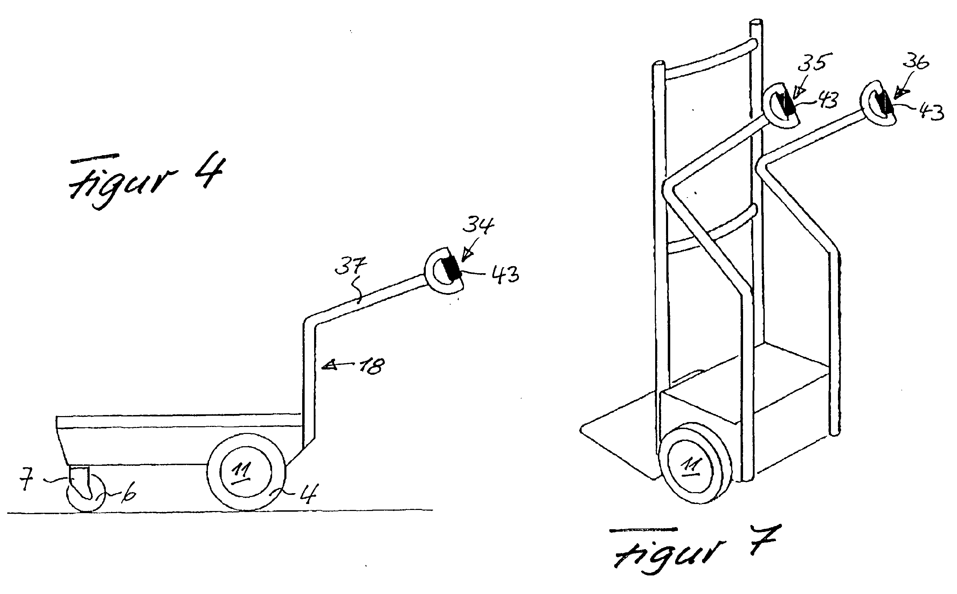

Die in der Figur 7 dargestellte Ausführungsform eines Verteiler-bzw. Zustellerwagens unterscheidet sich von der vorstehend er-läuterten Ausführungsform nach den Figuren 5 und 6 dadurch, daß der Wagen als zweirädrige, lediglich zwei vermittels Radnabenmotoren 11 antreibbare, um eine feststehende Achse rotierende Laufrollen 4 aufweisende Karre gestaltet ist. Hinsichtlich der Ansteuerung der Radnabenmotoren 11 mittels einer frei progra-mmierbaren Steuer-und Regeleinheit 42 sowie hinsichtlich der Ausbildung der Handgriffe 35 und 36 und der in diesen angeordneten Kraftmesser 38 und 39 entspricht die Ausrüstung dieser Ausführungsform eines Verteiler-bzw. Zustellerwagens derjenigen der vorstehend im Zusammenhang mit einem über insgesamt vier Rollen gegen den Boden abgestützten Ausführungsform.

Der Griffsteg des in der Figur 8 dargestellten Handgriffes 34 weist ein starres Innenteil 44 mit einer rechteckigen, mit wenigstens zwei ihrer einander gegenüberliegenden Wandungen ein Widerlager für Kraftmesser 39 und 39 bildende Profilquerschnittform auf, wobei gemäß der Darstellung in der Figur 10 bei paarweise an einem Verteiler-bzw. Zustellerwagen anzuordnenden Handgriffen 35 und 36 zwei jeweils durch einen Streifen eines Folienmaterials, welches seinen elektrischen Widerstand propor-tional zu einer auf seine Gesamtfläche aufgebrachten Druckkraft ändert, bestehende Kraftmesser 38 und 39 einander in Wagenlängsrichtung gegenüberliegend angeordnet sind. Bei als einziger Handgriff 34 an einem Verteiler-bzw. Zustellerwagen einzusetzen-den Handgriffen sind gemäß der Darstellung nach Figur 9 zur Erfassung von Lenkkräften zwei weitere einander in Wagenquerrichtung gegenüberliegend gegen das Innenteil 44 des Griffsteges 43 des Handgriffes 34 abgestützte, gleichfalls durch Folienstreifen gebildete Kraftmesser 40 und 41 angeordnet. Im Übrigen ist der Griffsteg 43 des Handgriffes 34 bei jeder Anwendungsform mit einer Umhüllung 50 aus einem zwar innerhalb gewisser Grenzen elastisch verformbaren, jedoch Druckkräfte übertragenden Material umhüllt. An dem Handgriff 34 sind zudem ein Schalter 51 zur Stillegung der Hilfskraftantriebseinrichtung des Verteiler-bzw. Zustellerwagens und eine durch eine Leuchtdiode 52 gebildete Ladezustandsanzeige der Akkumulatoren angeordnet.

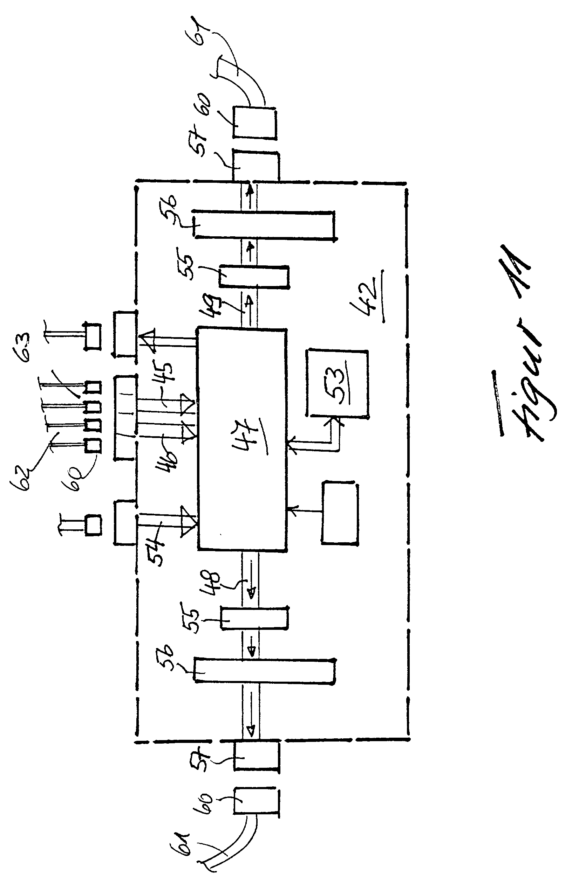

Die in der Figur 11 schematisch dargestellte, die Energieversor-gung der Elektromotoren beherrschende Steuer-und Regeleinheit 42 ist insgesamt auf einem Trägerteil angeordnet und umfaßt einen elektronischen Rechner 47 und einen frei programierbaren Spei-cher 53, wobei jedem der Kraftmesser 38 bis 41 ein eigener Eingang 45, 46 und jedem der beiden Elektromotoren 11 jeweils ein eigener Ausgang 48, 49 des Rechners 47 zugeordnet sind. Der frei programmierbare Speicher 53 der Steuer-und Regeleinheit 42 enthält die variablen Kriterien für die Zuschaltung bzw. Stromversorgung der Elektromotoren, wie zulässige, vom Bediener aufzubringende Kraft, Anpassung an varierende Betriebsverhältnisse und dergl., und kann in Abhängigkeit von Anwendungsfall programmiert werden, wozu bei der gezeigten Ausführungsform der frei programmierbare Speicher 53 der Steuer-und Regeleinheit 42 mit dem Rechner 47 baueinheitlich angeordnet und mittels einer in der Zeichnung nicht besonders dargestellten, über einen besonderen durch eine Schnittstelle gebildeten Eingang 54 an den Rechner 47 anschließbaren, externen Einrichtung programmierbar ist. Sämtliche Ein-und Ausgänge des Rechners 47 der Steuer-und Regeleinheit 42 sind mit als Steckanschlüsse ausgebildeten Schnittstellen zum Anschluß von Leitungsverbindungen einerseits zu den Kraftmessern und andererseits zur Stromversorgung für die Radnabenmotoren 11 des Systems versehen.
Insbesondere sind die der Ansteuerung der Radnabenmotoren 11 zugeordneten Ausgänge 48 und 49 des Rechners 47 jeweils vermittels einer Treiberstufe 55 und einer Endstufe 56 an eine durch einen Stecker 57 gebildete Schnittstelle angeschlossen.

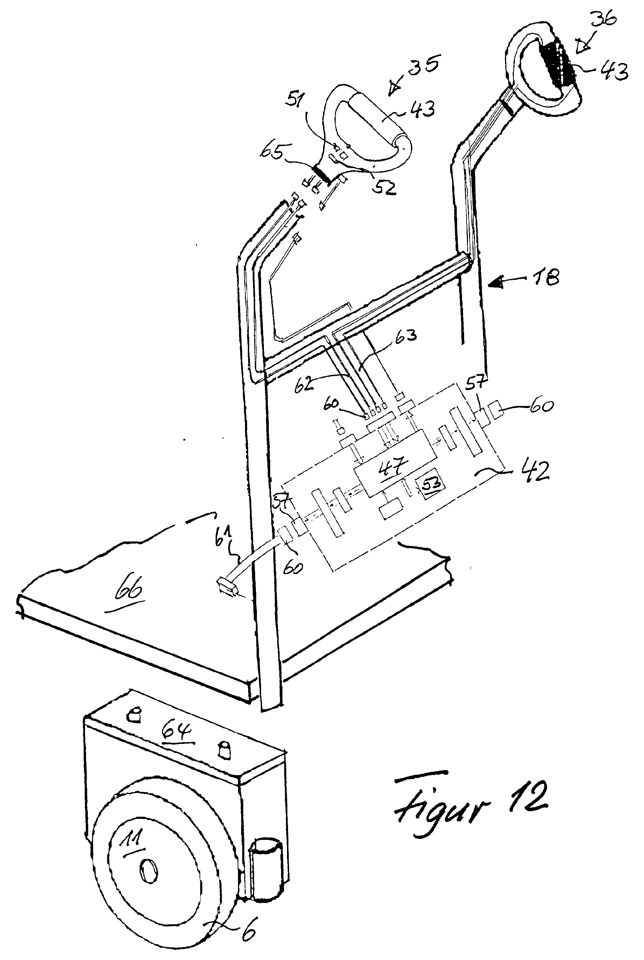

In der Figur 12 ist schließlich anhand einer schematischen Explosionsdarstellung ein sich aus einer Vereinheitlichung von Komponenten ergebender Aufbau eines auch nachrüstbaren Hilfsantriebes für Verteiler-bzw. Zustellerwagen verdeutlicht.
Gemäß der Darstellung nach Figur 12 sind die Ein-45,46 sowie 54 und die Ausgänge 48 und 49 des Rechners 47 der Steuer-und Regeleinheit 42 als Steckanschlüsse ausgebildet und sind der Verbindung der Steuer-und Regeleinheit 42 einerseits mit in den Handgriffen 34 bzw. 35,36 angeordneten Kraftmessern 38 bis 39 bzw. Kontrolleuchten 52 und dergl. und andererseits mit den Ansteuerungen der Radnabenmotoren 11 ihrerseits mit Steckanschlüssen 60 versehene Leitungsverbindungen 61, 62, 63 zugeordnet. Die Hangriffe 35 und 36 sowie die jeweils einen getrie-belos integrierten Antriebsmotor 11 aufweisenden angetriebenen Rollen 4 sind vermittels Adapter 64 bzw. 65 an das Chassis 66 bzw. einen Griffbügel 18 des Wagens anbaubar.

## Patentansprüche

1. Verteiler-bzw. Zustellerwagen, bestehend aus einem aus Rah-menholmen und Quertraversen gebildeten und über wenigstens eine um eine vertikale Achse schwenkbare Lenkrolle und zwei Bockrollen gegen den Boden abgestützten Wagenchassis und einem an dieses angeschlossenen aufragenden Griffbügel, wobei jeder der beiden Rollen eines Rollenpaares (Bock-oder Lenkrollen) ein getriebelos integrierter, unter Last anlau-fender, drehrichtungs-umkehrbarer Elektromotor zugeordnet ist und wobei die Energieversorgung der Elektromotoren durch eine Steuereinrichtung beherrscht ist, welche wenigstens einen die auf den Wagen ausgeübte Zug-oder Schubkraft bzw. Lenkkraft erkennenden und in ein Steuersignal umsetzenden Kraftmesser und eine Steuer-und Regeleinrichtung zur Ener-gieversorgung der Elektromotoren im Verhältnis zu der je-weils auf den Wagen ausgeübten Schub-oder Zugkraft umfaßt,und bei dem die die Energieversorgung der Elektromotoren beherrschende Steuer-und Regeleinheit durch eine frei programmierbare elektronische Steuer-und Regeleinheit gebildet ist, wobei die die Energieversorgung der Elektromotoren beherrschende Steuer-und Regeleinheit einen elektronischen Rechner und einen frei programierbaren Speicher umfaßt, wobei jedem der Kraftmesser ein eigener Eingang und jedem der beiden Elektromotoren jeweils ein eigener Ausgang des Rechners zu-geordnet sind.
**dadurch gekennzeichnet,**
**daß** der. eine Deichsel des Wagens ausgebildet und mit mindestens einem Handgriff ausgestattet ist und daß der Handgriff mit einem Paar die an dem Griffbügel bzw der Deichsel in Wagenlängsrichtung ausgeübten Schub-und Zugkräfte und mit einem Paar die in Wagenquerrichtung an dem Griffbügel bzw an der Deichsel ausgeübten Lenkkräfte erfassenden und in Steuersignale umwandelnden Kraftmessern ausgestattet ist, wobei jeweils einem der beiden Elektromotoren der Antriebsachse einer der beiden Moment-oder Kraftmesser und zwar jeweils dem an der gleichen Wagenseite angeordneten Elektromotor zugeordnet ist.

2. Verteiler-bzw. Zustellerwagen nach Anspruch 1, **dadurch gekennzeichnet, daß** die Kraftmesser durch Streifen aus einem seinen elektrischen Widerstand in Abhängigkeit von einer auf seine Grundrißfläche insgesamt aufgebrachten Druckkraftbe-aufschlagung varierendem Folienmaterial gebildet und sowohl in Wagenlängsrichtung als auch in Wagenquerrichtung einander gegenüberliegend an einem einen quadratischen Profilquer-schnitt aufweisenden vertikal ausgerichteten Griffsteg des an die Deichsel angeschlossenen Handgriffes angeordnet sind.

3. Verteiler-bzw. Zustellerwagen nach Anspruch 1 und 2, **dadurch gekennzeichnet, daß** der Griffbügel des Wagens mit zwei in Wagenquerrichtung zueinander beabstandet angeordneten Handgriffen ausgestattet ist, wobei in jedem der beiden Handgriffe zwei bezüglich eines Widerlagers einander gegenüberliegend angeordnete lediglich auf den Wagen ausgeübte Schub-und Druckkräfte erkennende, insbesondere durch Streifen eines Folienmaterials, welches seinen elektrischen Widerstand proportional zu einer auf seine Gesamtfläche insgesamt aufgebrachten Druckkraft ändert, gebildete Kraftmesser angeordnet sind.

4. Verteiler-bzw. Zustellerwagen nach einem der Ansprüche 1 bis 3, **dadurch gekennzeichnet, daß** jedem der aus zwei in einen Handgriff integrierten Folienstreifen gebildeten Kraftmesser ein eigener Eingang des Rechners der Steuer-und Regeleinheit zugeordnet ist und daß jedem der beiden Kraftmesser jeweils ein Ausgang des Rechners zur Ansteuerung eines Radnabenan-triebes zugeordnet ist.

5. Verteiler-bzw. Zustellerwagen nach Anspruch 1 bis 4, **dadurch gekennzeichnet, daß** ein aus einem rohrförmigen Profilmaterial bestehender und insgesamt als etwa U- förmiger Schiebebügel ausgebildeter Griffbügel vorgesehen ist, wobei die freien Enden der beiden Profilschenkel der U-Form im wesentlichen vertikal aufragend und starr an das Wagenchassis angeschlossen sind und der Profilgrund der U-Form einen zumindest zum Benutzer hin abgewinkelten Bügel bildet und daß an jedem der beiden Profilschenkel des Schiebebügels je ein Moment- oder Kraftmesser angeordnet ist.

6. Verteiler-bzw. Zustellerwagen nach Anspruch 1 bis 5, **dadurch gekennzeichnet,daß** die beiden Moment-oder Kraftmesser bezüglich des Profilmaterials des Schiebebügels innenliegend angeordnet und als jeweils in einer Ebene wirkende, aus-schließlich in Wagenlängsrichtung gerichtete Kräfte erfas-sende Sensoren ausgebildet sind.

7. Verteiler-bzw. Zustellerwagen nach einem der Ansprüche 1 bis 6, **dadurch gekennzeichnet,daß** jeder der beiden Moment-oder Kraftmesser jeweils einem der beiden Elektromotoren der Antriebsachse und zwar jeweils dem an der gleichen Wagenseite angeordneten Elektromotor zugeordnet ist.

8. Verteiler-bzw. Zustellerwagen nach einem der Ansprüche 1 bis 7, **dadurch gekennzeichnet, daß** die Sensoren als Moment-messer ausgebildet und im Bereich der Fußteile der Profil-schenkel des Schiebebügels angeordnet sowie zur Erzeugung eines das angreifende Moment wiederspiegelnden Steuerstromes zur Ansteuerung der Steuereinrichtung für die Energiezufuhr für den jeweils zugehörigen bzw. gleichseitig angeordneten Elektromotor ausgebildet sind.

9. Verteiler-bzw. Zustellerwagen nach einem der Ansprüche 1 bis 8, **dadurch gekennzeichnet, daß** die Sensoren als Kraft-messer ausgebildet und im Bereich des Bügels des Schiebe-bügels angeordnet sowie zur Erzeugung eines die angreifende Kraft wiederspiegelnden Steuerstromes zur Ansteuerung der Steuereinrichtung für die Energiezufuhr für den jeweils zugehörigen bzw. gleichseitig angeordneten Elektromotor ausgebildet sind.
